# EUROPEAN PATENT APPLICATION

(11) **EP 4 815 430 A1**
(43) Date of publication of application: **30.09.2026**
(21) Application number: 25773085.3
(22) Date of filing: 18.03.2025
(51) Int. Cl.: H04N 5/265

(54) **WORK PUBLISHING METHOD AND APPARATUS, WORK VIEWING METHOD AND APPARATUS, DEVICE, AND STORAGE MEDIUM**

(30) Priority: 20.03.2024 CN 202410324001
(71) Applicant: Beijing Zitiao Network Technology Co., Ltd., Beijing 100190 (CN)
(72) Inventor: SONG, Wen, Beijing 100028 (CN); LI, Xin, Beijing 100028 (CN)
(74) Representative: Marks & Clerk LLP
(86) International application number: PCT/CN2025/083278
(87) International publication number: WO 2025/195387

(57) **Abstract**

The embodiments of the present disclosure relate to a method, an apparatus, a device, and a storage medium for posting a work and viewing a work. The method provided here includes: receiving a creation request associated with video content; displaying an editing interface, the editing interface displaying image content and text content determined based on the video content; and posting a picture-text work associated with the video content based on at least one operation received in the editing interface, the picture-text work being generated based on the image content and the text content.

## Description

The present application claims priority to Chinese Patent Application No. 202410324001.5, filed on March 20, 2024 and entitled "METHOD, APPARATUS, DEVICE AND STORAGE MEDIUM FOR POSTING WORK AND VIEWING WORK", which is incorporated herein by reference in its entirety.

### FIELD

Example embodiments of the present disclosure generally relate to the field of computers, and in particular, to a method, an apparatus, a device, and a computer-readable storage medium for posting work and viewing work.

### BACKGROUND

With the development of computer technologies, the Internet has become an important platform for people to exchange information. For example, people may create, share, or obtain various types of media works over the Internet. Common media works may include, for example, video works, picture-text works, and the like.

### SUMMARY

In a first aspect of the present disclosure, a method for posting work is provided. The method includes: receiving a creation request associated with video content; displaying an editing interface, the editing interface displaying image content and text content determined based on the video content; and posting a picture-text work associated with the video content based on at least one operation received in the editing interface, the picture-text work being generated based on the image content and the text content.

In a first aspect of the present disclosure, a method for viewing work is provided. The method includes: displaying a first viewing interface of a first work; and displaying a second viewing interface of a second work associated with the first work based on a selection of a first redirect entry in the first viewing interface, where one of the first work and the second work is a video work associated with video content, and the other of the first work and the second work is a picture-text work posted based on the video content.

In a third aspect of the present disclosure, an apparatus for posting work is provided. The apparatus includes: a receiving module configured to receive a creation request associated with video content; a display module configured to display an editing interface, the editing interface displaying image content and text content determined based on the video content; and a posting module configured to post a picture-text work associated with the video content based on at least one operation received in the editing interface, the picture-text work being generated based on the image content and the text content.

In a fourth aspect of the present disclosure, an apparatus for viewing work is provided. The apparatus includes: a second display module configured to display a first viewing interface of a first work; and a third display module configured to display a second viewing interface of a second work associated with the first work based on a selection of a first redirect entry in the first viewing interface, where one of the first work and the second work is a video work associated with video content, and the other of the first work and the second work is a picture-text work posted based on the video content.

In a fifth aspect of the present disclosure, an electronic device is provided. The device includes at least one processing unit; and at least one memory, the at least one memory being coupled to the at least one processing unit and storing instructions for execution by the at least one processing unit. The instructions, when executed by the at least one processing unit, cause the device to perform the method of the first aspect or the second aspect.

In a sixth aspect of the present disclosure, a computer-readable storage medium is provided. The computer-readable storage medium has a computer program stored thereon, the computer program being executable by a processor to implement the method of the first aspect or the second aspect.

It should be understood that the content described in the content part of the present disclosure is not intended to limit key features or important features of the embodiments of the present disclosure, and is also not intended to limit the scope of the present disclosure. Other features of the present disclosure will become readily comprehensible through the following description.

### BRIEF DESCRIPTION OF THE DRAWINGS

The foregoing and other features, advantages, and aspects of the embodiments of the present disclosure become more apparent with reference to the following detailed description and in conjunction with the drawings. In the drawings, the same or similar reference numerals denote the same or similar elements.
Fig. 1 is a schematic diagram of an example environment in which the embodiments according to the present disclosure may be implemented;
Fig. 2A to Fig. 2C show example interfaces according to some embodiments of the present disclosure;
Fig. 3A to Fig. 3C show example interfaces according to some embodiments of the present disclosure;
Fig. 4A is a flowchart of an example process of posting a work according to some embodiments of the present disclosure;
Fig. 4B is a flowchart of an example process of viewing a work according to some embodiments of the present disclosure;
Fig. 5A is a schematic structural block diagram of an example apparatus for posting a work according to some embodiments of the present disclosure;
Fig. 5B is a schematic structural block diagram of an example apparatus for viewing a work according to some embodiments of the present disclosure; and
Fig. 6 is a block diagram of an electronic device capable of implementing a plurality of embodiments of the present disclosure.

### DETAILED DESCRIPTION OF EMBODIMENTS

The embodiments of the present disclosure are described in more detail below with reference to the drawings. Although some embodiments of the present disclosure are shown in the drawings, it should be understood that the present disclosure may be implemented in various forms, and should not be construed as being limited to the embodiments set forth herein. Instead, these embodiments are provided for more thorough and complete understanding of the present disclosure. It should be understood that the drawings and embodiments of the present disclosure are only for illustrative purposes, and are not intended to limit the protection scope of the present disclosure.

It should be noted that the titles of any sections/subsections provided herein are not restrictive. Various embodiments are described throughout this specification, and any type of embodiments may be included under any section/subsection. In addition, the embodiments described in any section/subsection may be combined with any other embodiments described in the same section/subsection and/or different sections/subsections in any manner.

In the description of the embodiments of the present disclosure, the term "include/comprise" and similar terms should be construed as open-ended inclusions, that is, "include/comprise but not limited to". The term "based on" should be construed as "at least partially based on". The term "one embodiment" or "the embodiment" should be construed as "at least one embodiment". The term "some embodiments" should be construed as "at least some embodiments". Other explicit and implicit definitions may also be included below. The terms "first", "second", etc. may refer to different or same objects. Other explicit and implicit definitions may also be included below.

The embodiments of the present disclosure may involve user's data, data acquisition and/or use, etc. These aspects all comply with the corresponding laws, regulations, and related provisions. In the embodiments of the present disclosure, all data collection, acquisition, processing, machining, forwarding, use, etc., are carried out on the premise that the user is aware and confirms. Accordingly, when implementing the various embodiments of the present disclosure, the user should be informed of the type, range of use, use scenarios, etc., of the data or information that may be involved, and the authorization of the user should be obtained, through appropriate means in accordance with relevant laws and regulations. The specific manner of informing and/or authorizing may vary according to actual situations and application scenarios, and the scope of the present disclosure is not limited in this regard.

If the solutions in this specification and the embodiments involve personal information processing, the processing will be carried out on the premise that there is a legal basis (for example, the consent of the personal information subject is obtained, or it is necessary to perform a contract, etc.), and will only be carried out within the scope of the provisions or agreements. If the user refuses to process personal information other than the necessary information required for the basic functions, it will not affect the user's use of the basic functions.

As discussed above, people may create, share, or obtain various types of media works over the Internet. Common media works may include, for example, video works, picture-text works, and the like.

Video works and picture-text works have different information presentation manners, which may cause some users to prefer a specific manner to obtain information. In some occasions, in order to satisfy the information obtaining needs of more users, some creators need to edit and post video works and image works separately, which takes more time costs of the creators.

In an aspect, the embodiments of the present disclosure provide a solution for posting a work. According to the solution, a creation request associated with video content is received; an editing interface is displayed, the editing interface displaying image content and text content determined based on the video content; and a picture-text work associated with the video content is posted based on at least one operation received in the editing interface, the picture-text work being generated based on the image content and the text content.

In this way, the embodiments of the present disclosure are capable of supporting the posting of the corresponding picture-text work based on the video content, thereby improving the efficiency of creation and display of the work.

In another aspect, the embodiments of the present disclosure provide a solution for viewing a work. According to the solution, a first viewing interface of a first work is displayed; and a second viewing interface of a second work associated with the first work is displayed based on a selection of a first redirect entry in the first viewing interface, where one of the first work and the second work is a video work associated with video content, and the other of the first work and the second work is a picture-text work posted based on the video content.

In this way, the embodiments of the present disclosure are capable of supporting the redirect between the associated picture-text work and video work, thereby improving the efficiency of information access.

Various example implementations of the solution are described in detail below with further reference to the drawings.

### Example Environment

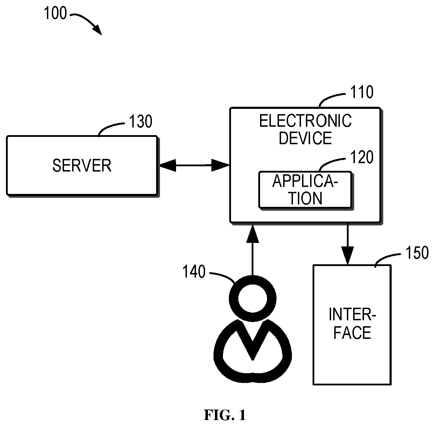

Fig. 1 is a schematic diagram of an example environment 100 in which the embodiments of the present disclosure may be implemented. As shown in Fig. 1, the example environment 100 may include an electronic device 110.

In the example environment 100, the electronic device 110 may run an application 120 supporting interface interaction. The application 120 may be any appropriate type of application for interface interaction, examples of which may include but are not limited to a video application, a social application, or other appropriate applications. A user 140 may interact with the application 120 via the electronic device 110 and/or its attached device.

In the environment 100 of Fig. 1, if the application 120 is in an active state, the electronic device 110 may present an interface 150 for supporting the interface interaction through the application 120.

In some embodiments, the electronic device 110 communicates with a server 130 to implement provision of services of the application 120. The electronic device 110 may be any type of mobile terminal, fixed terminal, or portable terminal, including a mobile phone, a desktop computer, a laptop computer, a notebook computer, a netbook computer, a tablet computer, a media computer, a multimedia tablet, a palmtop computer, a portable game terminal, a VR/AR device, a personal communication system (PCS) device, a personal navigation device, a personal digital assistant (PDA), an audio/video player, a digital camera/video camera, a positioning device, a television receiver, a radio broadcast receiver, an e-book device, a gaming device, or any combination thereof, including fittings and peripherals of these devices or any combination thereof. In some embodiments, the electronic device 110 may also support any type of user-specific interface (such as a "wearable" circuit, etc.).

The server 130 may be an independent physical server, a server cluster or a distributed system composed of a plurality of physical servers, or a cloud server that provides basic cloud computing services such as cloud services, cloud databases, cloud computing, cloud functions, cloud storage, network services, cloud communications, middleware services, domain name services, security services, content delivery networks, and big data and artificial intelligence platforms. The server 130 may include, for example, a computing system/server, such as a mainframe computer, an edge computing node, a computing device in a cloud environment, and the like. The server 130 may provide backstage services for the application 120 supporting a virtual scene in the electronic device 110.

A communication connection may be established between the server 130 and the electronic device 110. The communication connection may be established in a wired or wireless manner. The communication connection may include but is not limited to a Bluetooth connection, a mobile network connection, a universal serial bus (USB) connection, a wireless fidelity (WiFi) connection, etc., and the embodiments of the present disclosure are not limited in this regard. In the embodiments of the present disclosure, the server 130 and the electronic device 110 may implement signaling interaction through the communication connection therebetween.

It should be understood that the structures and functions of the elements in the environment 100 are described for exemplary purposes only, without suggesting any limitation to the scope of the present disclosure.

Some example embodiments of the present disclosure are described below with continued reference to the drawings.

### Work Creation

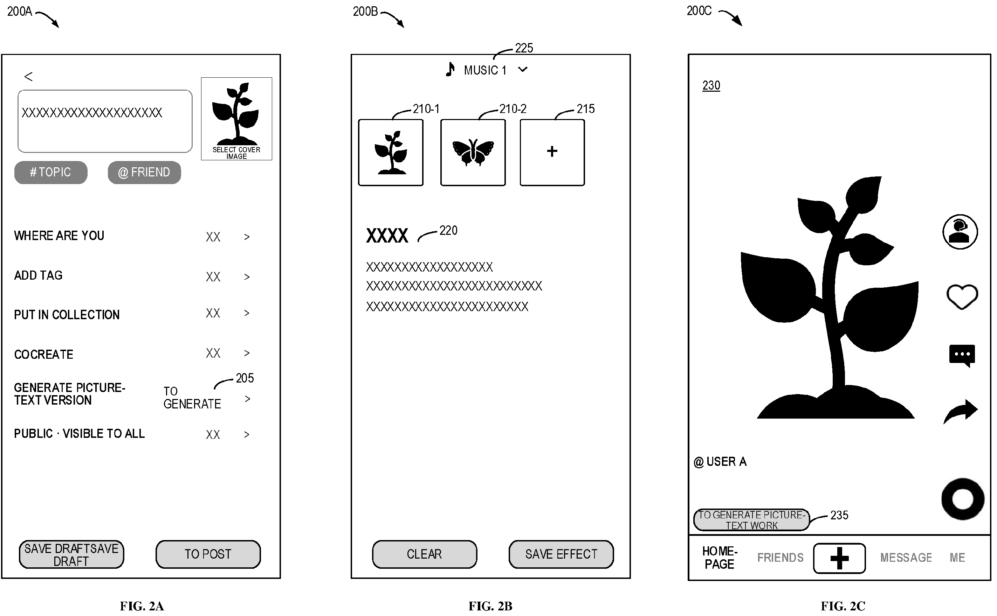

The following describes example interactions in a work creation process according to some embodiments of the present disclosure with reference to Fig. 2A to Fig. 2C. Fig. 2A to Fig. 2C show example interfaces 200A to 200C according to some embodiments of the present disclosure. The interfaces 200A to 200C may be provided, for example, by the electronic device 110 shown in Fig. 1.

As shown in Fig. 2A, the electronic device 110 may provide a posting interface 200A for posting a video work. As an example, after the user completes operations such as uploading and editing of video content in the video work, the electronic device 110 may provide the posting interface 200A for the user.

In the posting interface 200A, the electronic device 110 may provide one or more controls for acquiring posting information of the video work. Such posting information may include, for example, but is not limited to, a text description of the video work, a posting location, tag information, collection information, co-creation information, public scope information, and the like.

In some embodiments, as shown in Fig. 2A, the electronic device 110 may further provide a creation entry 205 in the posting interface 200A. After receiving the selection of the creation entry 205, the electronic device 110 may present an editing interface 200B as shown in Fig. 2B.

In some embodiments, the electronic device 110 may provide, in the editing interface 200B, image content and text content determined based on the video content in the video work to be posted.

As shown in Fig. 2B, the image content may include one or more images determined from the video content, for example, an image 210-1 and an image 210-2 (individually or collectively referred to as images 210).

In some embodiments, such image 210 may include one or more video frames of the video content or portion(s) of the video frame. In some embodiments, the image 210 may be determined from the video content by the electronic device 110, the server 130, or other appropriate electronic devices.

In some embodiments, the electronic device 110 or the server 130 may determine the image 210 from the video content based on text information associated with the video content. For example, such text information may include but is not limited to subtitles of the video content, speech transcript text of the video content, description text of the video content, and the like.

As an example, the electronic device 110 or the server 130 may select one or more video frames, from a plurality of video frames of the video content, whose matching degree with such text information meets a preset condition, as the image(s) 210.

In some embodiments, the editing interface 200B may further provide the text content 220 determined based on the video content. Such text content 220 may include a title and description text of the picture-text work to be posted.

As an example, the electronic device 110, the server 130, or other appropriate electronic devices may determine the text content 220 based on the text information associated with the video content. As an example, such text information may include, for example, but is not limited to, first text information corresponding to an audio part of the video content, second text information corresponding to a subtitle part of the video content, third text information associated with semantics of the video content, description text acquired via the posting interface, and the like.

In some embodiments, the electronic device 110 or the server 130 may, for example, use a language model to generate the text content 220 based on the text information associated with the video content.

In some embodiments, the electronic device 110 or the server 130 may also first generate the text content 220, and determine one or more images 210 matching the text content from the video content based on the text content 220.

In this way, the embodiments of the present disclosure are capable of supporting the automatic conversion from the video content to the text work, thereby improving the creation efficiency of the text work.

In some embodiments, in order to improve the quality of the generated image content 210 and the generated text content 220, the electronic device 110 may further acquire guidance information input by the user, and may provide the guidance information to a target device, so that the target device determines the image content 210 or the text content 220 based on the guidance information.

In some embodiments, such guidance information may be used to indicate style information of the image content or the text content to be generated. For example, the user may input the guidance information to express that the image to be extracted matches a specific style, or the generated text content has a specific expression style.

In still some embodiments, such guidance information may further indicate, for example, theme information of the image content or the text content to be generated. For example, the user may input information to express the desire to create a picture-text work about a specific theme, and enable the generated picture-text content to match such theme.

In this way, the embodiments of the present disclosure are capable of supporting the guidance of the generation of the picture-text content based on the user input, thereby improving the quality of the generated picture-text content.

In some embodiments, the electronic device 110 may further support the user to edit the generated image content 210 and/or the generated text content 220 via the editing interface 200B. As an example, the electronic device 110 may receive the selection of the image 210-1 by the user, and may delete the image 210-1 based on the deletion operation of the user.

As another example, the electronic device 110 may add a new image through a control 215, and such new image may be a video frame in the video content or other images.

As yet another example, as an example, the electronic device 110 may receive the selection of the image 210-2 by the user, and may support the user to replace the image 210-2. As an example, the electronic device 110 may allow the user to select a specified frame in the video content to replace the image, or the image may be replaced by uploading or shooting a new image.

In some embodiments, the electronic device 110 may further support configuring a music file 225 in the picture-text work. Such music file 225 may be played when the picture-text work is viewed. In some examples, such music file 225 may include music automatically recommended based on the image content 210, the text content 220, and/or the video content. Alternatively, such music file 225 may also be a music file used when the video work is created with the video content.

In some embodiments, after completing the editing or confirmation of the image content, the text content, and/or the music file in the picture-text work, the electronic device 110 may receive the user's request to post the video work via the interface 200A, to post the video work and the corresponding picture-text work at the same time.

In some embodiments, the picture-text work may be posted based on at least part of the posting information in the posting interface 200A. For example, the picture-text work may inherit at least one piece of posting information of the video work, such as public scope, tag information, location information, co-creation information, and the like.

The creation process of the picture-text work is described above by taking the co-posting of the video work and the picture-text work as an example. In some examples, the electronic device 110 may also allow the user to trigger the generation and posting process of the picture-text work through the creation entry in other target interfaces associated with the video, and the other target interfaces may include, for example, a viewing interface of the work or an interaction information display interface of the work, where the interaction information may include but is not limited to favorites information, likes information, comment information, and the like.

As shown in Fig. 2C, the electronic device 110 may provide a viewing interface 200C of a video work 230 that has posted by the current user. In some embodiments, the electronic device 110 may provide a creation entry 235 in the viewing interface 200C, for example.

The electronic device 110 may further present an editing interface similar to that shown in Fig. 2B based on the user's selection of the creation entry 235, to generate the corresponding image content and text content based on the video content associated with the video work 230.

Reference may be made to the content described above for the generation and editing process of the image content and/or the text content in the picture-text work, and details are not repeated herein.

Further, after receiving the posting request for the picture-text work, the electronic device 110, for example, may post the picture-text work based on at least part of the posting information of the video work 230. Alternatively, the electronic device 110 may also support the user to separately configure the posting information of the picture-text work, for example.

It should be understood that although the creation entry 235 is provided in the work playing area of the viewing interface 200C in Fig. 2C, such creation entry may also be provided in any appropriate area or component of the viewing interface as needed. For example, such creation entry may be provided in the interaction information viewing panel (for example, the comment panel) of the viewing interface.

In some embodiments, the electronic device 110 may further provide such creation entry in other appropriate interfaces, for example. For example, the electronic device 110 may provide such creation entry in a personal page of the current user in association with the posted video work or the video draft.

In this way, the embodiments of the present disclosure are capable of supporting the posting of the corresponding picture-text work based on the video content, thereby improving the efficiency of creation and display of the work.

### Work Viewing

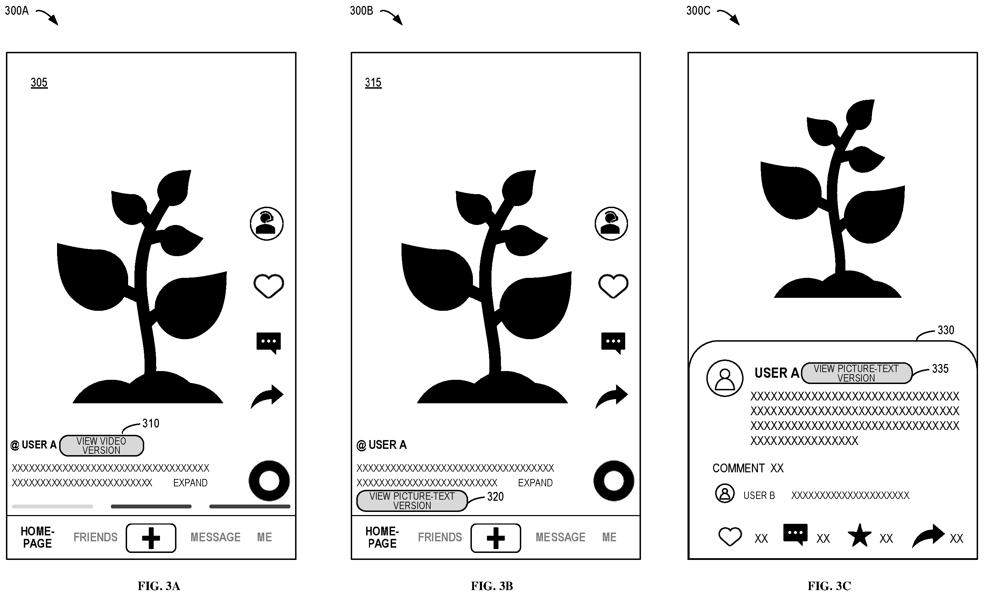

The following describes example interactions in a work viewing process according to some embodiments of the present disclosure with reference to Fig. 3A to Fig. 3C. Fig. 3A to Fig. 3C show example interfaces 300A to 300C according to some embodiments of the present disclosure. The interfaces 300A to 300C may be provided, for example, by the electronic device 110 shown in Fig. 1.

Fig. 3A shows, for example, a viewing interface 300A based on a picture-text work 305. Such picture-text work 305 may be created and posted, for example, based on the process described above, which will not be repeated in the present disclosure.

In some embodiments, the electronic device 110 may further provide a redirect entry 310 in the viewing interface 300A. After receiving the selection of the redirect entry 310, the electronic device 110 may provide a viewing interface 300B of a video work 315 corresponding to the picture-text work 305.

In some embodiments, as introduced above, such picture-text work 305 may be posted together with the video work 315, for example; or such picture-text work 305 may be created based on the posted video work 315, for example. This enables the picture-text work 305 and the video work 315 to be associated with the same video content.

In some embodiments, the picture-text work 305 and the video work 315 may be associated with unified interaction information. As an example, such interaction information may include but is not limited to favorites information, likes information, comment information, and the like. In this case, the user's interaction information for one work may be synchronized to the other work.

In some embodiments, the picture-text work 305 and the video work 315 may also be associated with separate interaction information. As an example, the picture-text work 305 and the video work 315 may have separate comment content, so that the user may separately comment on the picture-text work 305 or the video work 315.

In some embodiments, the picture-text work 305 and the video work 315 may further correspond to the same work identification, to be managed based on the same work representation (for example, work ID). In this case, the picture-text work 305 and the video work 315 may display unified interaction information; and when the user deletes a work, the other corresponding work may be deleted accordingly.

In some embodiments, the picture-text work 305 and the video work 315 may further correspond to separate work identifications, to be managed as two independent works. In this case, the picture-text work 305 and the video work 315 may display independent interaction information; and when the user deletes a work, the other corresponding work may continue to be retained.

In some embodiments, in order to improve the viewing experience when switching between different types of works, the electronic device 110 may further determine the playing progress of the video work 315 based on the playing progress of the picture-text work 305, and play the video work 315 starting from the corresponding progress in the interface 300B accordingly.

In some embodiments, the electronic device 110 may further provide in the viewing interface 300B, similarly, a redirect entry 320 for switching to browsing the picture-text work 305. For example, the electronic device 110 may receive the selection of the redirect entry 320, and present the interface 300A shown in Fig. 3A accordingly.

Similarly, when receiving the selection of the redirect entry 320, the electronic device 110 may further determine the playing progress of the picture-text work 305 based on the playing progress of the video work 315, and play the picture-text work 305 starting from the corresponding progress in the interface 300A accordingly.

Fig. 3A and Fig. 3B above show that the redirect entry 310 or the redirect entry 320 is provided in the work playing area of the viewing interface. In some embodiments, the redirect entry for switching to browsing the other corresponding work may also be displayed in other appropriate positions or components of the viewing interface.

As an example, as shown in Fig. 3C, the electronic device 110 may provide a redirect entry 335 in an interaction information display panel 330 of the work (the picture-text work or the video work) to support browsing the corresponding picture-text work or the corresponding video work. As an example, the interaction information display panel 330 may include a comment panel of the work.

In this way, the embodiments of the present disclosure are capable of supporting the redirect between the associated picture-text work and video work, thereby improving the efficiency of information access.

### Example Process

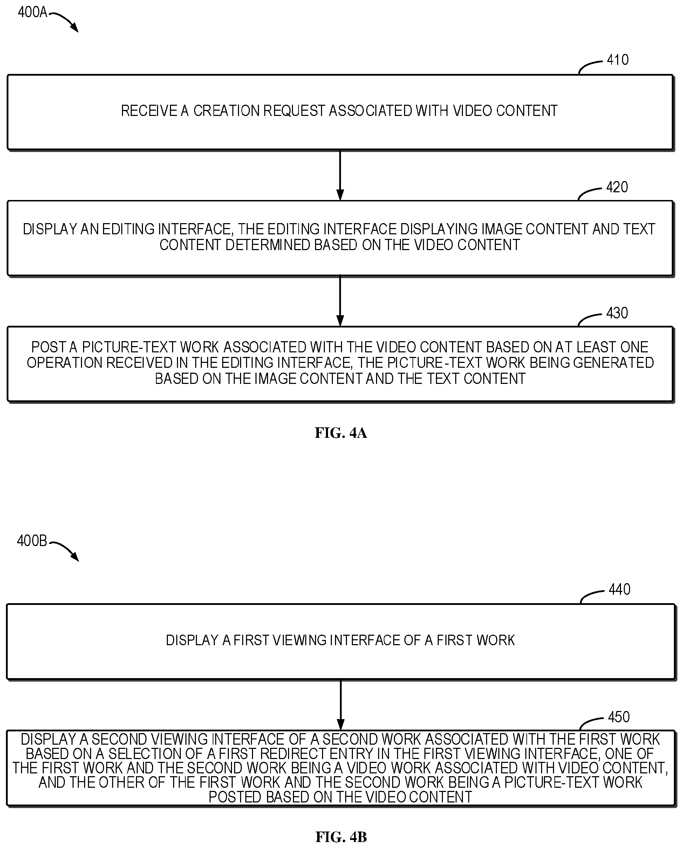

Fig. 4A is a flowchart of an example process 400A of posting a work according to some embodiments of the present disclosure. The process 400A may be implemented at the electronic device 110. The process 400A is described below with reference to Fig. 1.

As shown in the figure, at a block 410, the electronic device 110 receives a creation request associated with video content.

At a block 420, the electronic device 110 displays an editing interface, the editing interface displaying image content and text content determined based on the video content.

At a block 430, the electronic device 110 posts a picture-text work associated with the video content based on at least one operation received in the editing interface, the picture-text work being generated based on the image content and the text content.

In some embodiments, receiving the creation request associated with the video content includes: displaying a target interface associated with the video content; and receiving the creation request associated with the video content based on a selection of a creation entry in the target interface.

In some embodiments, the target interface includes a posting interface for posting a video work associated with the video content, or a viewing interface for viewing the video work associated with the video content.

In some embodiments, the process 400A further includes: determining posting information based on the posting interface; and posting the video work corresponding to the video content based on the posting information, where the picture-text work is associated with at least part of the posting information.

In some embodiments, the image content or the text content displayed in the editing interface is determined further based on the posting information.

In some embodiments, the video work is associated with a first viewing interface, the picture-text work is associated with a second viewing interface, and the process 400A further includes: providing a first redirect entry in the first viewing interface, the first redirect entry being used for redirect to the second viewing interface of the picture-text work; and/or providing a second redirect entry in the second viewing interface, the second redirect entry being used for redirect to the first viewing interface of the video work.

In some embodiments, the first redirect entry or the second redirect entry is provided in a work playing area of the corresponding viewing interface; and/or the first redirect entry or the second redirect entry is provided in an interaction information display panel of the corresponding work.

In some embodiments, the process 400A further includes: in response to the first redirect entry being triggered, determining a second playing progress of the picture-text work in the second viewing interface based on a first playing progress of the video work in the first viewing interface; or in response to the second redirect entry being triggered, determining a fourth playing progress of the video work in the first viewing interface based on a third playing progress of the picture-text work in the second viewing interface.

In some embodiments, the video work and the picture-text work are associated with unified interaction information; or the video work and the picture-text work are associated with separate interaction information.

In some embodiments, the picture-text work and the video work correspond to the same work identification.

In some embodiments, the image content includes at least one video frame determined from the video content.

In some embodiments, the text content is determined based on text information associated with the video content, the text information including at least one of: first text information corresponding to an audio part of the video content, second text information corresponding to a subtitle part of the video content, or third text information associated with semantics of the video content.

In some embodiments, the process 400A further includes: acquiring guidance information input by a user; and providing the guidance information for a target device to determine the image content or the text content according to the guidance information.

In some embodiments, the guidance information indicates at least one of: style information of the image content or the text content, or theme information of the image content or the text content.

In some embodiments, posting the picture-text work associated with the video content based on the at least one operation received in the editing interface includes: receiving an editing operation for the image content via the editing interface; and posting the picture-text work based on a received posting request, the picture-text work including the edited image content.

In some embodiments, the editing operation includes at least one of: a first operation for deleting an existing image in the image content, a second operation for adding an additional image to the image content, or a third operation for replacing an existing image in the image content with a specified video frame of the video content.

In some embodiments, the process 400A further includes: updating the text content based on the edited image content, such that the picture-text work includes the updated text content.

Fig. 4B is a flowchart of an example process 400B of viewing a work according to some embodiments of the present disclosure. The process 400B may be implemented at the electronic device 110. The process 400B is described below with reference to Fig. 1.

As shown in the figure, at a block 440, the electronic device displays a first viewing interface of a first work.

At a block 450, the electronic device 110 displays a second viewing interface of a second work associated with the first work based on a selection of a first redirect entry in the first viewing interface. One of the first work and the second work is a video work associated with video content, and the other of the first work and the second work is a picture-text work posted based on the video content.

In some embodiments, the process 400B further includes: providing the first redirect entry in a work playing area in the first viewing interface; and/or providing the first redirect entry in an interaction information display panel of the first work.

In some embodiments, the process 400B further includes: providing a second redirect entry in the second viewing interface, the second redirect entry being used for access to the first viewing interface of the first work.

In some embodiments, the process 400B further includes: determining a second playing progress of the second work in the second viewing interface based on a first playing progress of the first work in the first viewing interface; and playing the second work in the second viewing interface based on the second playing progress.

In some embodiments, at least part of the image content and/or the text content of the picture-text work is generated based on the video content.

In some embodiments, the first work and the second work are associated with unified interaction information; or the first work and the second work are associated with separate interaction information.

In some embodiments, the first work and the second work correspond to the same work identification.

### Example Apparatus and Device

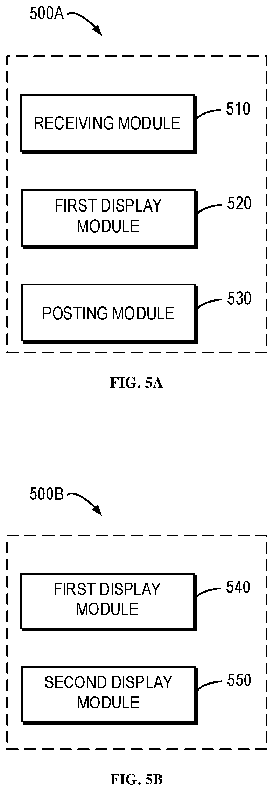

The embodiments of the present disclosure further provide corresponding apparatuses for implementing the above methods or processes. Fig. 5A is a schematic structural block diagram of an example apparatus 500A for posting work according to some embodiments of the present disclosure. The apparatus 500A may be implemented as or included in the electronic device 110. Each module/component in the apparatus 500A may be implemented by hardware, software, firmware, or any combination thereof.

As shown in Fig. 5A, the apparatus 500A includes a receiving module 510 configured to receive a creation request associated with video content, a first display module 520 configured to display an editing interface, the editing interface displaying image content and text content determined based on the video content, and a posting module 530 configured to post a picture-text work associated with the video content based on at least one operation received in the editing interface, the picture-text work being generated based on the image content and the text content.

In some embodiments, the receiving module 510 is further configured to display a target interface associated with the video content; and receive the creation request associated with the video content based on a selection of a creation entry in the target interface.

In some embodiments, the target interface includes a posting interface for posting a video work associated with the video content, or a viewing interface for viewing the video work associated with the video content.

In some embodiments, the apparatus 500A further includes a processing module configured to determine posting information based on the posting interface; and post a video work corresponding to the video content based on the posting information, where the picture-text work is associated with at least part of the posting information.

In some embodiments, the image content or the text content displayed in the editing interface is determined further based on the posting information.

In some embodiments, the video work is associated with a first viewing interface, the picture-text work is associated with a second viewing interface, and the apparatus 500A further includes a redirect module configured to provide a first redirect entry in the first viewing interface, the first redirect entry being used for redirect to the second viewing interface of the picture-text work; and/or provide a second redirect entry in the second viewing interface, the second redirect entry being used for redirect to the first viewing interface of the video work.

In some embodiments, the first redirect entry or the second redirect entry is provided in a work playing area of the corresponding viewing interface; and/or the first redirect entry or the second redirect entry is provided in an interaction information display panel of the corresponding work.

In some embodiments, the apparatus 500A further includes a determination module configured to, in response to the first redirect entry being triggered, determine a second playing progress of the picture-text work in the second viewing interface based on a first playing progress of the video work in the first viewing interface; or in response to the second redirect entry being triggered, determine a fourth playing progress of the video work in the first viewing interface based on a third playing progress of the picture-text work in the second viewing interface.

In some embodiments, the video work and the picture-text work are associated with unified interaction information; or the video work and the picture-text work are associated with separate interaction information.

In some embodiments, the picture-text work and the video work correspond to the same work identification.

In some embodiments, the image content includes at least one video frame determined from the video content.

In some embodiments, the text content is determined based on text information associated with the video content, the text information including at least one of: first text information corresponding to an audio part of the video content, second text information corresponding to a subtitle part of the video content, or third text information associated with semantics of the video content.

In some embodiments, the apparatus 500A further includes a first processing module configured to acquire guidance information input by a user; and provide the guidance information for a target device to determine the image content or the text content according to the guidance information.

In some embodiments, the guidance information indicates at least one of: style information of the image content or the text content, or theme information of the image content or the text content.

In some embodiments, the posting module 530 is further configured to receive an editing operation for the image content via the editing interface; and post the picture-text work based on a received posting request, the picture-text work including edited image content.

In some embodiments, the editing operation includes at least one of: a first operation for deleting an existing image in the image content, a second operation for adding an additional image to the image content, or a third operation for replacing an existing image in the image content with a specified video frame of the video content.

In some embodiments, the apparatus 500A further includes an updating module configured to update the text content based on the edited image content, such that the picture-text work includes the updated text content.

The embodiments of the present disclosure further provide corresponding apparatuses for implementing the above methods or processes. Fig. 5B is a schematic structural block diagram of an example apparatus 500B for viewing work according to some embodiments of the present disclosure. The apparatus 500B may be implemented as or included in the electronic device 110. Each module/component in the apparatus 500B may be implemented by hardware, software, firmware, or any combination thereof.

As shown in Fig. 5B, the apparatus 500B includes a second display module 540 configured to display a first viewing interface of a first work, and a third display module 550 configured to display a second viewing interface of a second work associated with the first work based on a selection of a first redirect entry in the first viewing interface, where one of the first work and the second work is a video work associated with video content, and the other of the first work and the second work is a picture-text work posted based on the video content.

In some embodiments, the apparatus 500B further includes a first providing module configured to provide the first redirect entry in a work playing area in the first viewing interface; and/or provide the first redirect entry in an interaction information display panel of the first work.

In some embodiments, the apparatus 500B further includes a second providing module configured to provide a second redirect entry in the second viewing interface, the second redirect entry being used for access to the first viewing interface of the first work.

In some embodiments, the apparatus 500B further includes a progress controlling module configured to determine a second playing progress of the second work in the second viewing interface based on a first playing progress of the first work in the first viewing interface; and play the second work in the second viewing interface based on the second playing progress.

In some embodiments, at least part of the image content and/or the text content of the picture-text work is generated based on the video content.

In some embodiments, the first work and the second work are associated with unified interaction information; or the first work and the second work are associated with separate interaction information.

In some embodiments, the first work and the second work correspond to the same work identification.

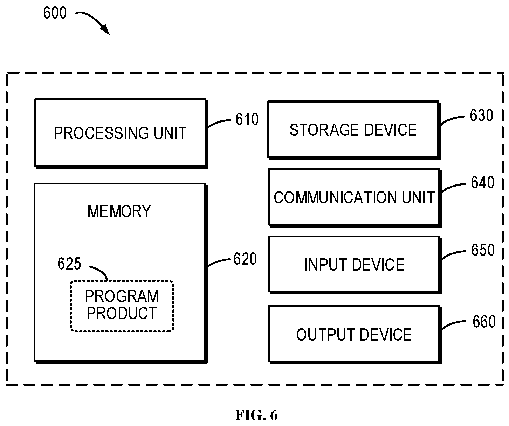

Fig. 6 is a block diagram of an electronic device 600 in which one or more embodiments of the present disclosure may be implemented. It should be understood that the electronic device 600 shown in Fig. 6 is only exemplary, without suggesting any limitation to the functions and scope of the embodiments described herein. The electronic device 600 shown in Fig. 6 may be used to implement the electronic device 110 in Fig. 1.

As shown in Fig. 6, the electronic device 600 is in the form of a general electronic device. Components of the electronic device 600 may include, but are not limited to, one or more processors or processing units 610, a memory 620, a storage device 630, one or more communication units 640, one or more input devices 650, and one or more output devices 660. The processing unit 610 may be an actual or virtual processor and may perform various processing based on programs stored in the memory 620. In a multi-processor system, a plurality of processing units perform computer executable instructions in parallel to improve the parallel processing capability of the electronic device 600.

The electronic device 600 typically includes a plurality of computer storage medium. Such medium may be any available medium accessible by the electronic device 600, including, but not limited to, volatile and non-volatile medium, and removable and non-removable medium. The memory 620 may be a volatile memory (for example, a register, a cache, a random access memory (RAM)), a non-volatile memory (such as a read-only memory (ROM), an electrically erasable programmable read-only memory (EEPROM), a flash memory), or any combination thereof. The storage device 630 may be any removable or non-removable medium, and may include a machine readable medium such as a flash drive, a disk, or any other medium, which may be used to store information and/or data and may be accessed within the electronic device 600.

The electronic device 600 may further include additional removable/non-removable, volatile/non-volatile memory medium. Although not shown in Fig. 6, a disk driver for reading from or writing to a removable, non-volatile disk (such as a "floppy disk"), and an optical disk driver for reading from or writing to a removable, non-volatile optical disk may be provided. In these cases, each driver may be connected to a bus (not shown) by one or more data medium interfaces. The memory 620 may include a computer program product 625 having one or more program modules configured to perform various methods or acts of the various embodiments of the present disclosure.

The communication unit 640 implements communication with other electronic devices through a communication medium. Additionally, the functions of the components of the electronic device 600 may be implemented by a single computing cluster or a plurality of computing machines, which may communicate through communication connections. Therefore, the electronic device 600 may use a logical connection with one or more other servers, a network personal computer (PC), or another network node to operate in a networked environment.

The input device 650 may be one or more input devices, such as a mouse, a keyboard, a tracking ball, etc. The output device 660 may be one or more output devices, such as a display, a speaker, a printer, etc. The electronic device 600 may further communicate with one or more external devices (not shown) such as a storage device and a display device, communicate with one or more devices enabling the user to interact with the electronic device 600, or communicate with any devices (such as a network card and a modem) enabling the electronic device 600 to communicate with one or more other electronic devices, as needed, through the communication unit 640. Such communication may be performed via input/output (I/O) interfaces (not shown).

According to an exemplary implementation of the present disclosure, there is provided a computer-readable storage medium having computer executable instructions stored thereon, where the computer executable instructions are executed by a processor to implement the method described above. According to an exemplary implementation of the present disclosure, there is further provided a computer program product tangibly stored on a non-transitory computer-readable medium and including computer executable instructions, where the computer executable instructions are executed by a processor to implement the method described above.

Various aspects of the present disclosure are described herein with reference to flowcharts and/or block diagrams of methods, apparatuses, devices, and computer program products implemented according to the present disclosure. It should be understood that each block of the flowcharts and/or block diagrams, and combinations of blocks in the flowcharts and/or block diagrams, may be implemented by computer readable program instructions.

These computer readable program instructions may be provided to a processing unit of a general-purpose computer, a special-purpose computer, or other programmable data processing apparatus to produce a machine, such that the instructions, when executed by the processing unit of the computer or other programmable data processing apparatus, produce an apparatus for implementing a function/act specified in one or more blocks of the flowcharts and/or block diagrams. These computer readable program instructions may also be stored in a computer-readable storage medium, and the instructions cause a computer, a programmable data processing apparatus, and/or other devices to work in a specific manner, such that the computer-readable medium storing the instructions includes a manufactured product including instructions for implementing various aspects of the function/act specified in one or more blocks of the flowcharts and/or block diagrams.

The computer readable program instructions may be loaded onto a computer, another programmable data processing apparatus, or other device, such that a series of operations and steps are performed on the computer, the other programmable data processing apparatus, or the other device, to produce a computer-implemented process, such that the instructions executed on the computer, the other programmable data processing apparatus, or the other device implement the function/act specified in one or more blocks of the flowcharts and/or block diagrams.

The flowcharts and block diagrams in the drawings show the possibly implemented architectures, functions, and operations of the systems, methods, and computer program products according to a plurality of implementations of the present disclosure. In this regard, each block in the flowchart or block diagram may represent a module, program segment, or part of instruction, and the module, program segment, or part of instruction contains one or more executable instructions for implementing the specified logical function. In some alternative implementations, the functions marked in the blocks may also occur in an order different from that marked in the drawings. For example, two consecutive blocks may actually be performed substantially in parallel, or they may sometimes be performed in the reverse order, depending on the functions involved. It should also be noted that each block in the block diagram and/or the flowchart, and the combination of blocks in the block diagram and/or the flowchart, may be implemented by a special-purpose hardware-based system that executes a specified function or act, or may be implemented by a combination of special-purpose hardware and computer instructions.

The implementations of the present disclosure have been described above, and the above description is exemplary, non-exhaustive, and not limited to the disclosed implementations. Many modifications and variations will be apparent to those of ordinary skill in the art without departing from the scope and spirit of the described implementations. The selection of terms used herein is intended to best explain the principles, practical applications, or improvements to the technology in the market of the implementations, or to enable other those of ordinary skill in the art to understand the various implementations disclosed herein.

## Claims

1. A method for posting a work, comprising:
receiving a creation request associated with video content;
displaying an editing interface, the editing interface displaying image content and text content determined based on the video content; and
posting a picture-text work associated with the video content based on at least one operation received in the editing interface, the picture-text work being generated based on the image content and the text content.

2. The method of claim 1, wherein receiving the creation request associated with the video content comprises:
displaying a target interface associated with the video content; and
receiving the creation request associated with the video content based on a selection of a creation entry in the target interface.

3. The method of claim 2, wherein the target interface comprises:
a posting interface for posting a video work associated with the video content, or
a viewing interface for viewing a video work associated with the video content.

4. The method of claim 3, further comprising:
determining posting information based on the posting interface; and
posting the video work corresponding to the video content based on the posting information, wherein the picture-text work is associated with at least part of the posting information.

5. The method of claim 4, wherein the image content or the text content displayed in the editing interface is determined further based on the posting information.

6. The method of claim 3, wherein the video work is associated with a first viewing interface, the picture-text work is associated with a second viewing interface, and the method further comprises:
providing a first redirect entry in the first viewing interface, the first redirect entry configured for redirect to the second viewing interface of the picture-text work; and/or
providing a second redirect entry in the second viewing interface, the second redirect entry configured for redirect to the first viewing interface of the video work.

7. The method of claim 6, wherein:
the first redirect entry or the second redirect entry is provided in a work playing area of the corresponding viewing interface; and/or
the first redirect entry or the second redirect entry is provided in an interaction information display panel of the corresponding work.

8. The method of claim 6, further comprising:
determining, in response to the first redirect entry being triggered, a second playing progress of the picture-text work in the second viewing interface based on a first playing progress of the video work in the first viewing interface; or
determining, in response to the second redirect entry being triggered, a fourth playing progress of the video work in the first viewing interface based on a third playing progress of the picture-text work in the second viewing interface.

9. The method of claim 3, wherein:
the video work and the picture-text work are associated with unified interaction information; or
the video work and the picture-text work are associated with separate interaction information.

10. The method of claim 3, wherein the picture-text work and the video work correspond to a same work identification.

11. The method of claim 1, wherein the image content comprises at least one video frame determined from the video content.

12. The method of claim 1, wherein the text content is determined based on text information associated with the video content, the text information comprising at least one of:
first text information corresponding to an audio part of the video content;
second text information corresponding to a subtitle part of the video content; or
third text information associated with semantics of the video content.

13. The method of claim 1, further comprising:
acquiring guidance information input by a user; and
providing the guidance information for a target device to determine the image content or the text content according to the guidance information.

14. The method of claim 13, wherein the guidance information indicates at least one of:
style information of the image content or the text content; or
theme information of the image content or the text content.

15. The method of claim 1, wherein posting the picture-text work associated with the video content based on the at least one operation received in the editing interface comprises:
receiving, via the editing interface, an editing operation for the image content; and
posting the picture-text work based on a received posting request, the picture-text work comprising the edited image content.

16. The method of claim 15, wherein the editing operation comprises at least one of:
a first operation for deleting an existing image in the image content;
a second operation for adding an additional image to the image content; or
a third operation for replacing an existing image in the image content with a specified video frame of the video content.

17. The method of claim 15, further comprising:
updating the text content based on the edited image content, such that the picture-text work comprises the updated text content.

18. A method for viewing a work, comprising:
displaying a first viewing interface of a first work; and
displaying a second viewing interface of a second work associated with the first work based on a selection of a first redirect entry in the first viewing interface,
wherein one of the first work and the second work is a video work associated with video content, and the other of the first work and the second work is a picture-text work posted based on the video content.

19. The method of claim 18, further comprising:
providing the first redirect entry in a work playing area in the first viewing interface; and/or
providing the first redirect entry in an interaction information display panel of the first work.

20. The method of claim 18, further comprising:
providing a second redirect entry in the second viewing interface, the second redirect entry configured for access to the first viewing interface of the first work.

21. The method of claim 18, further comprising:
determining, based on a first playing progress of the first work in the first viewing interface, a second playing progress of the second work in the second viewing interface; and
playing the second work in the second viewing interface based on the second playing progress.

22. The method of claim 18, wherein at least part of image content and/or text content of the picture-text work is generated based on the video content.

23. The method of claim 18, wherein:
the first work and the second work are associated with unified interaction information; or
the first work and the second work are associated with separate interaction information.

24. The method of claim 18, wherein the first work and the second work correspond to a same work identification.

25. An apparatus for posting a work, comprising:
a receiving module configured to receive a creation request associated with video content;
a first display module configured to display an editing interface, the editing interface displaying image content and text content determined based on the video content; and
a posting module configured to post a picture-text work associated with the video content based on at least one operation received in the editing interface, the picture-text work being generated based on the image content and the text content.

26. An apparatus for posting a work, comprising:
a second display module configured to display a first viewing interface of a first work; and
a third display module configured to display a second viewing interface of a second work associated with the first work based on a selection of a first redirect entry in the first viewing interface,
wherein one of the first work and the second work is a video work associated with video content, and the other of the first work and the second work is a picture-text work posted based on the video content.

27. An electronic device, comprising:
at least one processing unit; and
at least one memory, the at least one memory being coupled to the at least one processing unit and storing instructions for execution by the at least one processing unit, the instructions, when executed by the at least one processing unit, causing the electronic device to perform the method of any of claims 1 to 17 or 18 to 24.

28. A computer-readable storage medium having a computer program stored thereon, the computer program being executable by a processor to implement the method of any of claims 1 to 17 or 18 to 24.
